(19) Europäisches Patentamt
European Patent Office
Office européen des brevets

(11) EP 3 316 378 B1

(12) EUROPEAN PATENT SPECIFICATION

(45) Date of publication and mention of the grant of the patent:
**11.06.2025 Bulletin 2025/24**

(21) Application number: **17199464.3**

(22) Date of filing: **31.10.2017**

(51) International Patent Classification (IPC):
***H01M 10/0525*** *(2010.01)* ***H01M 4/133*** *(2010.01)*
***H01M 4/1393*** *(2010.01)* ***H01M 4/587*** *(2010.01)*
*H01M 4/02 (2006.01)* *H01M 4/38 (2006.01)*
*H01M 4/48 (2010.01)*

(52) Cooperative Patent Classification (CPC):
**H01M 4/133; H01M 4/1393; H01M 4/587; H01M 10/0525;** H01M 4/386; H01M 4/387; H01M 4/48; H01M 2004/021; Y02E 60/10

# (54) NEGATIVE ELECTRODE COMPRISING PARTLY ORIENTED GRAPHITE ON CURRENT COLLECTOR FOR RECHARGEABLE LITHIUM BATTERY, AND RECHARGEABLE LITHIUM BATTERY

NEGATIVE ELEKTRODE BEINHALTEND TEILWEISE AUSGERICHTETES GRAPHIT AUF STROMSAMMLER FÜR WIEDERAUFLADBARE LITHIUMBATTERIE, SOWIE WIEDERAUFLADBARE LITHIUMBATTERIE

ÉLECTRODE NÉGATIVE COMPRENANT DU GRAPHITE PARTIELLEMENT ORIENTÉ SUR COLLECTEUR DE COURANT POUR BATTERIE RECHARGEABLE AU LITHIUM, ET BATTERIE RECHARGEABLE AU LITHIUM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.11.2016 KR 20160144621**

(43) Date of publication of application:
**02.05.2018 Bulletin 2018/18**

(73) Proprietor: **Samsung SDI Co., Ltd.**
**Yongin-si, Gyeonggi-do 17084 (KR)**

(72) Inventors:
- **LEE, Jinhyon**
**17084 Gyeonggi-do (KR)**
- **KA, Bokhyun**
**17084 Gyeonggi-do (KR)**
- **SHEEM, Kyeuyoon**
**17084 Gyeonggi-do (KR)**
- **AHN, Soonho**
**17084 Gyeonggi-do (KR)**

(74) Representative: **Marks & Clerk LLP**
**15 Fetter Lane**
**London EC4A 1BW (GB)**

(56) References cited:
**EP-A1- 2 538 484** **EP-A1- 2 660 903**
**EP-B1- 2 538 484** **EP-B1- 2 613 382**
**US-A1- 2012 021 294** **US-A1- 2015 030 931**

- **JULIETTE BILLAUD ET AL: "Magnetically aligned graphite electrodes for high-rate performance Li-ion batteries", NATURE ENERGY, vol. 1, no. 8, 4 July 2016 (2016-07-04), pages 1 - 6, XP055477548, DOI: 10.1038/nenergy.2016.97**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 316 378 B1

## Description

## BACKGROUND

### 1. Field

A negative electrode for a rechargeable lithium battery and a rechargeable lithium battery including the same are disclosed.

### 2. Description of the Related Art

A rechargeable lithium battery has recently drawn attention as a power source for small portable electronic devices. The rechargeable lithium battery uses an organic electrolyte solution and thereby, have twice or more as high a discharge voltage than a conventional battery using an alkali aqueous solution and accordingly, high energy density.

As for a positive active material of a rechargeable lithium battery, a lithium-transition metal oxide having a structure capable of intercalating lithium ions, such as $LiCoO_2$, $LiMn_2O_4$, $LiNi_{1-x}Co_xO_2$ ($0 < x < 1$), and the like has been used.

As for negative active materials, various carbon-based materials such as artificial graphite, natural graphite, hard carbon, and the like have been used. Recently, a non-carbon-based negative active material such as silicon or tin has been researched in order to obtain high capacity.

US 2015/030931 A1 relates to a non-aqueous electrolyte secondary battery including a negative electrode which contains an oriented negative electrode active material.

US 2012/021294 A1 relates to a carbonaceous material for use as an anode active material in a secondary battery.

## SUMMARY

The invention is related to a negative electrode according to claim 1, and a rechargeable lithium battery according to claim 9 comprising such a negative electrode.

A BET specific surface area of the negative electrode may be less than about 5.0 $m^2/g$.

The DD value of the negative electrode is greater than or equal to about 19 and less than or equal to about 60.

The negative electrode may have a loading level (L/L) of about 6 $mg/cm^2$ to about 65 $mg/cm^2$ on one side of the current collector.

The $I_a$ is a sum of peak intensities at $2\theta = 42.4\pm0.2°$, $43.4\pm0.2°$, $44.6\pm0.2°$, and $77.5\pm0.2°$ measured by XRD using a CuK$\alpha$ ray and the $I_{total}$ may be a sum of peak intensities at $2\theta=26.5\pm0.2°$, $42.4\pm0.2°$, $43.4\pm0.2°$, $44.6\pm0.2°$, $54.7\pm0.2°$, and $77.5\pm0.2°$ measured by XRD using a CuK$\alpha$ ray.

The peak intensities may be a peak integral area value.

The negative electrode may have a ratio($I_{(004)}/I_{(002)}$) of a peak intensity at a (004) plane relative to a peak intensity at a (002) plane of greater than or equal to about 0.04, for example greater than or equal to about 0.04 and less than or equal to about 0.07, measured by XRD using a CuK$\alpha$ ray.

The carbon-based negative active material is artificial graphite or a mixture of artificial graphite and natural graphite.

The negative active material layer may further include a Si-based negative active material, a Sn-based negative active material, a lithium vanadium oxide, or a combination thereof.

The negative electrode may have an active region facing a positive electrode and an inactive region not facing a positive electrode, and a DD value of the inactive region may be greater than or equal to about 19.

Another embodiment provides a rechargeable lithium battery including the negative electrode; a positive electrode including a positive active material; and an electrolyte.

The rechargeable lithium battery may be a high power battery. The rechargeable lithium battery may be a cylindrical battery. The rechargeable lithium battery may be a pouch type battery. The rechargeable lithium battery may be an 18650 type cylindrical battery or a 21700 type cylindrical battery.

At least some of the above and other features of the invention are set out in the claims.

Other embodiments are included in the following detailed description.

A negative electrode for a rechargeable lithium battery according to the invention provides a rechargeable lithium battery having improved battery characteristics.

## BRIEF DESCRIPTION OF THE DRAWINGS

FIG. 1 is a schematic view showing orientations of negative active materials according to an embodiment.
FIG. 2 is a view showing active and inactive regions of a negative electrode of a rechargeable lithium battery according to an embodiment.
FIG. 3 is a schematic view showing the structure of a rechargeable lithium battery according to an embodiment.
FIG. 4 is a graph showing XRD peaks of the negative electrode according to Example 1 measured using a CuKα ray.
FIG. 5 is a graph showing XRD peaks of the negative electrode according to Comparative Example 1 measured using a CuKα ray
FIG. 6 is a graph showing DC internal resistance (DC-IR) of rechargeable lithium battery cells according to Examples 2 to 4 and Comparative Examples 2 and 3 after charging and discharging under various SOC conditions.
FIG. 7 is a graph showing DC internal resistance (DC-IR) of the rechargeable lithium battery cells according to Example 2, Comparative Example 2, and Reference Example 1 after charging and discharging under various SOC conditions.
FIG. 8 is a graph showing charge capacity of the rechargeable lithium battery cells according to Examples 2 to 4 and Comparative Examples 2 and 3 after charging and discharging by changing their charge and discharge rates.
FIG. 9 is a graph showing charge capacity of the rechargeable lithium battery cells according to Example 2, Comparative Example 2, and Reference Example 1 after charging and discharging by changing their charge and discharge rates.
FIG. 10 is a graph showing cycle-life characteristics of the rechargeable lithium battery cells according to Examples 2 to 4, Comparative Examples 2 and 3, and Reference Example 1.
FIG. 11 is a photograph showing the surface of the negative electrodes obtained after full-charging and disassembling the rechargeable lithium battery cells of Comparative Example 2 and Example 3.
FIG. 12 is a graph showing thermal diffusivity of the negative electrodes according to Example 5 and Comparative Example 1.

## DETAILED DESCRIPTION

Hereinafter, embodiments are described in detail. However, the present invention is not limited to these embodiments and the present invention is defined by the scope of claims.

A negative electrode for a rechargeable lithium battery according to an embodiment includes a current collector and a negative active material layer disposed on the current collector and including a carbon-based negative active material, wherein a DD (Degree of Divergence) value defined by Equation 1 is greater than or equal to about 19 and less than or equal to about 60.

[Equation 1]

$$\text{DD (Degree of Divergence)} = (I_a/I_{total}) * 100$$

In Equation 1,

$I_a$ is a sum of peak intensities at non-planar angles measured by XRD using a CuKα ray, and
$I_{total}$ is a sum of peak intensities at all angles measured by XRD using a CuKα ray.

Herein, the non-planar angles denote 2θ = 42.4±0.2°, 43.4±0.2°, 44.6±0.2°, and 77.5±0.2° when measured by XRD using a CuKα ray, that is, a (100) plane, a (101)R plane, a (101)H plane, and a (110) plane. In general, graphite has a structure classified into a rhombohedral structure and a hexagonal structure having an ABAB type stacking sequence according to stacking order graphene layers, and the R plane denotes the rhombohedral structure, while the H plane denotes the hexagonal structure.

In addition, all the angles denote 2θ = 26.5±0.2 °, 42.4±0.2 °, 43.4±0.2 °, 44.6±0.2 °, 54.7±0.2 °, and 77.5±0.2 ° when measured by XRD using a CuKα ray, that is, a (002) plane, a (100) plane, a (101)R plane, a (101)H plane, a (004) plane, and a (110) plane. A peak at 2θ = 43.4±0.2 ° may appear by overlapping a peak of a (101)R plane of a carbon-based material with another peak of a (111) plane of a current collector, for example, Cu.

In general, peak intensity indicates a height of a peak or an integral area of the peak, and according to an embodiment, the peak intensity indicates the integral area of a peak.

In an embodiment, the XRD is measured under a measurement condition of $2\theta$ = 10° to 80 °, a scan speed (°/S) of 0.044 to 0.089, and a step size (°/step) of 0.013 to 0.039 by using a CuK$\alpha$ ray as a target ray but removing a monochromator to improve a peak intensity resolution.

The DD value of the negative electrode is greater than or equal to about 19 and less than or equal to about 60. The DD value of the negative electrode satisfying the condition means that a negative active material included in a negative active material layer is oriented at a predetermined angle, and this DD value is maintained after charges and discharges. In general, in order to orient a negative active material included in a negative active material layer at a predetermined angle, a magnetic field may be applied, while a negative active material composition is coated on a current collector.

Particularly, in order to manufacture a negative electrode having a DD value of greater than or equal to about 19 and specifically, greater than or equal to about 19 and less than or equal to about 60 according to the invention, strength of a magnetic field, exposure time to the magnetic field, and viscosity of a negative active material composition should be adjusted.

Hereinafter, describing a process of manufacturing the negative electrode according to an embodiment, the negative electrode is manufactured by disposing a current collector on or beneath a magnet and coating a negative active material composition including a negative active material on a current collector as shown in FIG. 1.

Herein, the magnet has strength of a magnetic field in a range of 1,000 Gauss to 10,000 Gauss (*e.g.* in a range of 1,000 Gauss to 5,000 Gauss, in a range of 2,000 Gauss to 5,000 Gauss, in a range of 3,000 Gauss to 5,000 Gauss or in a range of 3,800 Gauss to 5,000 Gauss). In addition, the negative active material composition is coated on the current collector and maintained for 3 seconds to 9 seconds, that is, is exposed to the magnetic field for 3 seconds to 9 seconds. In addition, the negative active material composition has viscosity of about 2000 cps to about 4000 cps (*e.g.* about 2000 cps to about 3500 cps, about 2000 cps to about 3000 cps or about 2300 cps to about 2700 cps) at room temperature (about 20 °C to about 25 °C). When the strength of a magnetic field, exposure time to the magnetic field, and the viscosity respectively satisfy the above conditions, a negative electrode having a DD value of greater than or equal to about 19 may be obtained.

In particular, when the coating process is performed while the current collector is moved, the magnetic field (magnetic flux) by the magnet may be formed vertically with the current collector, but since the magnetic field according to a coating speed (a speed of moving the current collector) is formed at a predetermined angle as a vector function, the negative active material included in the negative active material composition may stand, that is, be oriented at the predetermined angle on the surface of the current collector.

In addition, when the DD value is greater than or equal to about 19, the negative active material is not parallel to the current collector but oriented sufficiently enough to facilitate movement of Li ions in the negative electrode, that is, to control non-orientation, but when the DD value is less than about 19, DC internal resistance may be increased, rate capabilities, particularly, high rate capability may be remarkably deteriorated, and cycle-life characteristics may be deteriorated. In addition, when the DD value is greater than or equal to about 19 and less than or equal to about 60, the negative active material is not substantially vertically oriented with the current collector, but even when the negative active material is vertically oriented therewith, there may be a problem such as a battery deformation and the like as charges and discharges proceed.

In addition, when the DD value is greater than or equal to about 19, a DC internal resistance (DC-IR) may be minimized by suppressing a resistance increase at the end of the discharge, cycle-life characteristics may be improved, and in addition, energy density may be improved by suppressing expansion of an electrode plate during charges and discharges.

In addition, the DD value of greater than or equal to about 19 indicates orientation of the negative active material on the current collector at a predetermined angle, and accordingly, heat generated when a battery using this negative electrode is charged and discharged or heat generated by a short circuit during penetration and collision may be vertically diffused and thus easily discharged outside. Accordingly, ignition of the battery due to thermal runaway and an internal battery temperature increase may be suppressed, and thus battery characteristics may be improved. The DD value of less than about 19 indicates that the negative active material is substantially horizontally disposed on the current collector, and herein, heat generated therefrom is horizontally diffused and thus not easily discharged outside.

In an embodiment, the DD value is obtained by charging and discharging a rechargeable lithium battery including the negative electrode, disassembling the battery when completely discharged to obtain the negative electrode, and measuring XRD about the negative electrode. Herein, the charge and discharge are once to twice performed at about 0.1 C to about 0.2 C.

The negative electrode may have a peak intensity ratio at a (004) plane relative to a (002) plane, that is, $I_{(004)}/I_{(002)}$ of greater than or equal to about 0.04 and specifically, greater than or equal to about 0.04 to less than or equal to about 0.07 when XRD is measured by using a CuK$\alpha$ ray. When the negative electrode has $I_{(004)}/I_{(002)}$ of greater than or equal to about 0.04, DC internal resistance may not be increased, but rate capabilities and particularly, high rate capability may be improved, and cycle-life characteristics may also be improved.

In addition, the negative electrode may have a peak intensity ratio at a (110) plane relative to a (004) plane, that is, $I_{(110)}/I_{(004)}$ of greater than or equal to about 0.3 and specifically, greater than or equal to about 0.3 and less than or equal to

about 0.7 when XRD is measured by using a CuKα ray. When the negative electrode has $I_{(110)}/I_{(004)}$ of greater than or equal to about 0.3, DC internal resistance may not be increased, but rate capabilities and particularly, high rate capability may be improved, and cycle-life characteristics may also be improved. In an embodiment, since the DD value is a peak value at a non-plane relative to a peak value at all the angles and thus not linked with $I_{(110)}/I_{(004)}$, a $I_{(110)}/I_{(004)}$ value of greater than or equal to about 0.3 does not necessarily mean that the DD value is greater than or equal to about 19.

A BET specific surface area of the negative electrode may be less than about 5.0$m^2$/g, or about 0.6$m^2$/g to about 2.0$m^2$/g (e.g. about 0.6$m^2$/g to about 1.5$m^2$/g, about 0.6$m^2$/g to about 1.0$m^2$/g or about 0.7$m^2$/g to about 0.9$m^2$/g). When the BET specific surface area of the negative electrode is less than about 5.0 $m^2$/g, electrochemical cycle-life characteristics of the cell may be improved. In an embodiment, the BET is measured by charging and discharging a rechargeable lithium battery including the negative electrode, completely discharging the battery down to less than or equal to about 3 V, disassembling the battery to obtain the negative electrode, cutting the negative electrode into a predetermined size, and putting the cut negative electrode in a BET sample holder in a nitrogen gas adsorption method.

The negative electrode may have a loading level (L/L) of about 6 mg/$cm^2$ to about 65 mg/$cm^2$ (*e.g.* about 6 mg/$cm^2$ to about 50 mg/$cm^2$, about 6 mg/$cm^2$ to about 30 mg/$cm^2$, about 6 mg/$cm^2$ to about 20 mg/$cm^2$, about 10 mg/$cm^2$ to about 20 mg/$cm^2$, about 10 mg/$cm^2$ to about 14 mg/$cm^2$ or about 12 mg/$cm^2$) on one side of the current collector. Generally, the negative active material layers are formed on one side of a current collector and another side opposite to that one side. In the specification, the loading level refers to the loading level of the single layer of the negative active material layers on one side of the current collector.

The carbon-based negative active material is artificial graphite or a mixture of artificial graphite and natural graphite. When the negative active material is a crystalline carbon-based material such as artificial graphite or a mixture of natural graphite and artificial graphite, the crystalline carbon-based material has more developed crystalline characteristics than an amorphous carbon-based active material and thus may further improve orientation characteristics of a carbon material in an electrode about an external magnetic field. The artificial graphite or natural graphite may be amorphous, sheet-shaped, flake-shaped, spherically-shaped, fiber-shaped, or a combination thereof without a particular limit. In addition, the artificial graphite may be mixed with the natural graphite in a ratio of about 70 : 30 wt% to about 95 : 5 wt%.

In addition, the negative active material layer may further include at least one from an Si-based negative active material, an Sn-based negative active material, or a lithium vanadium oxide negative active material, as a semi or metal active material. When the negative active material layer further includes these materials, that is, the carbon-based negative active material as a first negative active material and the semi or metal active material as a second negative active material, the first and second negative active materials may be mixed in a weight ratio of about 50 : 50 to about 99 : 1.

The Si-based negative active material may be Si, a Si-C composite, $SiO_x$ ($0 < x < 2$), and an Si-Q alloy (wherein Q is an element selected from an alkali metal, an alkaline-earth metal, a Group 13 element, a Group 14 element, a Group 15 element, a Group 16 element, a transition metal, a rare earth element, and a combination thereof but not Si), and the Sn-based negative active material is selected from Sn, $SnO_2$, an Sn-R alloy (wherein R is an element selected from an alkali metal, an alkaline-earth metal, a Group 13 element, a Group 14 element, a Group 15 element, a Group 16 element, a transition metal, a rare earth element, and a combination thereof but not Si), and the like and also, a mixture of at least one thereof with $SiO_2$. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

According to another embodiment, the negative electrode may have an active region facing a positive electrode and an inactive region not facing the positive electrode. In other words, as shown in FIG. 2, a region (A) of the negative electrode facing the positive electrode is the active region, and another region (B) of the negative electrode not facing the positive electrode is the inactive region. The reason is that the inactive region where the negative electrode does not face the positive electrode is formed, since the negative electrode is manufactured to be larger than the positive electrode to improve battery safety. However, this inactive region may improve safety about a short circuit between positive and negative electrodes due to a lithium precipitation on the surface of the negative electrode during the charge but is farther from a moving path of lithium ions transported from the positive electrode, has relatively larger resistance of the lithium ions than the active region facing the positive electrode, and thus is present as a non-full charge region, but when the DD value of the inactive region is increased up to greater than or equal to about 19, the lithium ions may be more easily diffused and decrease the non-full charge region and thus increase battery capacity.

Herein, the active region and the inactive region may have a DD value of greater than or equal to about 19 and specifically, about 19 to about 60, and according to an embodiment, only the inactive region may have a DD value of greater than or equal to about 19 and specifically, about 19 to about 60. When only the inactive region has a DD value of greater than or equal to about 19, the DD value of the active region has no limit.

In the negative active material layer, the negative active material may be included in an amount of about 95 wt% to about 99 wt% based on the total weight of the negative active material layer.

In an embodiment, the negative active material layer includes a binder, and optionally a conductive material. In

the negative active material layer, a content of the binder may be about 1 wt% to about 5 wt% based on the total weight of the negative active material layer. When the negative active material layer includes a conductive material, the negative active material layer includes about 90 wt% to about 98 wt% of the negative active material, about 1 wt% to about 5 wt% of the binder, and about 1 wt% to about 5 wt% of the conductive material.

The binder improves binding properties of negative active material particles with one another and with a current collector. The binder may be a non-aqueous binder, an aqueous binder, or a combination thereof.

The non-aqueous binder may be polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, polyamideimide, polyimide, or a combination thereof.

The aqueous binder may be a styrene-butadiene rubber, an acrylated styrene-butadiene rubber (SBR), an acrylonitrile-butadiene rubber, an acrylic rubber, butyl rubber, an ethylenepropylene copolymer, polyepichlorohydrine, polyphosphazene, polyacrylonitrile, polystyrene, an ethylenepropylenediene copolymer, polyvinylpyridine, chlorosulfonated polyethylene, latex, polyester resin, an acrylic resin, a phenolic resin, an epoxy resin, polyvinyl alcohol, an acrylate-based resin, or a combination thereof.

When the aqueous binder is used as a negative electrode binder, a cellulose-based compound may be further used to provide viscosity as a thickener. The cellulose-based compound includes one or more of carboxylmethyl cellulose, hydroxypropylmethyl cellulose, methyl cellulose, or alkali metal salts thereof. The alkali metal may be Na, K, or Li. The thickener may be included in an amount of about 0.1 parts by weight to about 3 parts by weight based on 100 parts by weight of the negative active material.

The conductive material is included to provide electrode conductivity. Any electrically conductive material may be used as a conductive material unless it causes a chemical change. Examples of the conductive material may be a carbon-based material such as natural graphite, artificial graphite, carbon black, acetylene black, ketjen black, a carbon fiber, and the like; a metal-based material of a metal powder or a metal fiber including copper, nickel, aluminium, silver, and the like; a conductive polymer such as a polyphenylene derivative; or a mixture thereof.

The current collector may include one selected from a copper foil, a nickel foil, a stainless steel foil, a titanium foil, a nickel foam, a copper foam, a polymer substrate coated with a conductive metal, and a combination thereof, but is not limited thereto.

A rechargeable lithium battery according to another embodiment includes the negative electrode, a positive electrode, and an electrolyte.

The rechargeable lithium battery may be a high power battery. In other words, the rechargeable lithium battery may be usefully applied to an electronic device requiring high power such as a power tool, an electric vehicle, a vacuum cleaner, and the like. The reason is that the rechargeable lithium battery including the negative electrode according to an embodiment may easily release heat generated during the charge and discharge and particularly, when applied to a high-capacity cell and an electronic device for high power and thus may be suppressed from deterioration due to the heat and effectively used as a high power battery. In addition, the rechargeable lithium battery may easily release heat according to the charge and discharge and be effectively suppressed from a battery temperature increase and thus effectively improve cycle-life characteristics and particularly, cycle-life characteristics at a high rate.

This high power battery may be a cylindrical or pouch-shaped battery. In addition, this cylindrical battery may be a 18650 battery (a diameter of 18 mm, a height of 65 mm) and a 21700 battery (a diameter of 21 mm, a height of 70 mm).

The positive electrode may include a positive current collector and a positive active material layer formed on the positive current collector. The positive active material may include lithiated intercalation compounds that reversibly intercalate and deintercalate lithium ions. Specifically, one or more composite oxides of a metal selected from cobalt, manganese, nickel, and a combination thereof, and lithium may be used. More specifically, the compounds represented by one of the following chemical formulae may be used. $Li_aA_{1-b}X_bD_2$ ($0.90 \le a \le 1.8$, $0 \le b \le 0.5$); $Li_aA_{1-b}X_bO_{2-c}D_c$ ($0.90 \le a \le 1.8$, $0 \le b \le 0.5$, $0 \le c \le 0.05$); $Li_aE_{1-b}X_bO_{2-c}D_c$ ($0.90 \le a \le 1.8$, $0 \le b \le 0.5$, $0 \le c \le 0.05$); $Li_aE_{2-b}X_bO_{4-c}D_c$ ($0.90 \le a \le 1.8$, $0 \le b \le 0.5$, $0 \le c \le 0.05$); $Li_aNi_{1-b-c}Co_bX_cD_\alpha$ ($0.90 \le a \le 1.8$, $0 \le b \le 0.5$, $0 \le c \le 0.5$, $0 < \alpha \le 2$); $Li_aNi_{1-b-c}Co_bX_cO_{2-\alpha}T_\alpha$ ($0.90 \le a \le 1.8$, $0 \le b \le 0.5$, $0 \le c \le 0.05$, $0 < \alpha < 2$); $Li_aNi_{1-b-c}Co_bX_cO_{2-\alpha}T_2$ ($0.90 \le a \le 1.8$, $0 \le b \le 0.5$, $0 \le c \le 0.05$, $0 < \alpha < 2$); $Li_aNi_{1-b-c}Mn_bX_cD_\alpha$ ($0.90 \le a \le 1.8$, $0 \le b \le 0.5$, $0 \le c \le 0.05$, $0 < \alpha \le 2$); $Li_aNi_{1-b-c}Mn_bX_cO_{2-\alpha}T_\alpha$ ($0.90 \le a \le 1.8$, $0 \le b \le 0.5$, $0 \le c \le 0.05$, $0 < \alpha < 2$); $Li_aNi_{1-b-c}Mn_nX_cO_{2-\alpha}T_2$ ( $0.90 \le a \le 1.8$, $0 \le b \le 0.5$, $0 \le c \le 0.05$, $0 < \alpha < 2$); $Li_aNi_bE_cG_dO_2$ ($0.90 \le a \le 1.8$, $0 \le b \le 0.9$, $0 \le c \le 0.5$, $0.001 \le d \le 0.1$); $Li_aNi_bCo_cMn_dG_eO_2$ ($0.90 \le a \le 1.8$, $0 \le b \le 0.9$, $0 \le c \le 0.5$, $0 \le d \le 0.5$, $0.001 \le e \le 0.1$); $Li_aNiG_bO_2$ ($0.90 \le a \le 1.8$, $0.001 \le b \le 0.1$); $Li_aCoG_bO_2$ ($0.90 \le a \le 1.8$, $0.001 \le b \le 0.1$); $Li_aMn_{1-b}G_bO_2$ ($0.90 \le a \le 1.8$, $0.001 \le b \le 0.1$); $Li_aMn_2G_bO_4$ ($0.90 \le a \le 1.8$, $0.001 \le b \le 0.1$); $Li_aMn_{1-g}G_gPO_4$ ($0.90 \le a \le 1.8$, $0 \le g \le 0.5$); $QO_2$; $QS_2$; $LiQS_2$; $V_2O_5$; $LiV_2O_5$; $LiZO_2$; $LiNiVO_4$; $Li_{(3-f)}J_2(PO_4)_3$ ($0 \le f \le 2$); $Li_{(3-f)}Fe_2(PO_4)_3$ ($0 \le f \le 2$); $Li_aFePO_4$ ($0.90 \le a \le 1.8$).

In the above chemical formulae, A is selected from Ni, Co, Mn, and a combination thereof; X is selected from Al, Ni, Co, Mn, Cr, Fe, Mg, Sr, V, a rare earth element, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni,

Cu, and a combination thereof.

The compounds may have a coating layer on the surface, or may be mixed with another compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive active material by using these elements in the compound. For example, the method may include any coating method such as spray coating, dipping, and the like, but is not illustrated in more detail since it is well-known in the related field.

In the positive electrode, a content of the positive active material may be about 90 wt% to about 98 wt% based on the total weight of the positive active material layer.

In an embodiment, the positive active material layer may further include a binder and a conductive material. Herein, the binder and the conductive material may be included in an amount of about 1 wt% to about 5 wt%, respectively based on the total amount of the positive active material layer.

The binder improves binding properties of positive active material particles with one another and with a current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene butadiene rubber, an acrylated styrene butadiene rubber, an epoxy resin, nylon, and the like, but are not limited thereto.

The conductive material is included to provide electrode conductivity. Any electrically conductive material may be used as a conductive material unless it causes a chemical change. Examples of the conductive material include a carbon-based material such as natural graphite, artificial graphite, carbon black, acetylene black, ketjen black, a carbon fiber and the like; a metal-based material of a metal powder or a metal fiber including copper, nickel, aluminium, silver, and the like; a conductive polymer such as a polyphenylene derivative; or a mixture thereof.

The current collector may use Al, but is not limited thereto.

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethylacetate, methylpropionate, ethyl propionate, decanolide, mevalonolactone, caprolactone, and the like. The ether-based solvent may include dibutyl ether, tetraglyme, diglyme, dimethoxyethane, 2-methyltetrahydrofuran, tetrahydrofuran, and the like. The ketone-based solvent includes cyclohexanone, and the like. The alcohol-based solvent include ethyl alcohol, isopropyl alcohol, and the like, and examples of the aprotic solvent include nitriles such as R-CN (where R is a C2 to C20 linear, branched, or cyclic hydrocarbon, a double bond, an aromatic ring, or an ether bond), amides such as dimethylformamide, dioxolanes such as 1,3-dioxolane, sulfolanes, and the like.

The organic solvent may be used alone or in a mixture. When the organic solvent is used in a mixture, the mixture ratio may be controlled in accordance with a desirable battery performance.

The carbonate-based solvent may include a mixture with a cyclic carbonate and a linear carbonate. The cyclic carbonate and linear carbonate are mixed together in a volume ratio of about 1:1 to about 1:9. When the mixture is used as an electrolyte, it may have enhanced performance.

The organic solvent may further include an aromatic hydrocarbon-based solvent as well as the carbonate-based solvent. The carbonate-based solvent and aromatic hydrocarbon-based solvent may be mixed together in a volume ratio of about 1:1 to about 30:1.

The aromatic hydrocarbon-based organic solvent may be an aromatic hydrocarbon-based compound represented by Chemical Formula 1.

[Chemical Formula 1]

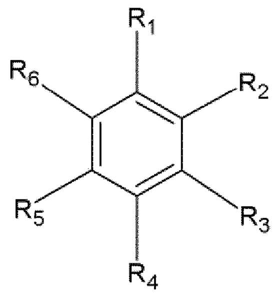

In Chemical Formula 1, $R_1$ to $R_6$ are the same or different and are selected from hydrogen, a halogen, a C1 to C10 alkyl group, a haloalkyl group, and a combination thereof.

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include an additive of vinylene carbonate, an ethylene carbonate-based compound represented by Chemical Formula 2, or propanesultone to improve a cycle life.

[Chemical Formula 2]

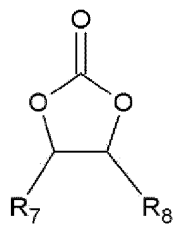

In Chemical Formula 2, $R_7$ and $R_8$ are the same or different and may be each independently hydrogen, a halogen, a cyano group (CN), a nitro group ($NO_2$), or a C1 to C5 fluoroalkyl group, provided that at least one of $R_7$ and $R_8$ is a halogen, a cyano group (CN), a nitro group ($NO_2$), or a C1 to C5 fluoroalkyl group, and $R_7$ and $R_8$ are not simultaneously hydrogen.

Examples of the ethylene carbonate-based compound include difluoro ethylenecarbonate, chloroethylene carbonate, dichloroethylene carbonate, bromoethylene carbonate, dibromoethylene carbonate, nitroethylene carbonate, cyanoethylene carbonate, or fluoroethylene carbonate. The amount of the additive for improving cycle life may be flexibly used within an appropriate range.

The lithium salt dissolved in an organic solvent supplies a battery with lithium ions, basically operates the rechargeable lithium battery, and improves transportation of the lithium ions between positive and negative electrodes. Examples of the lithium salt include at least one supporting salt selected from $LiPF_6$, $LiBF_4$, $LiSbF_6$, $LiAsF_6$, $LiN(SO_2C_2F_5)_2$, $Li(CF_3SO_2)_2N$, $LiN(SO_3C_2F_5)_2$, $LiC_4F_9SO_3$, $LiClO_4$, $LiAlO_2$, $LiAlCl_4$, $LiN(C_xF_{2x+1}SO_2)(C_yF_{2y+1}SO_2)$ (where x and y are natural numbers, for example integers of 1 to 20), LiCl, LiI, and $LiB(C_2O_4)_2$ (lithium bis(oxalato) borate; LiBOB). A concentration of the lithium salt may range from about 0.1 M to about 2.0 M. When the lithium salt is included at the above concentration range, an electrolyte may have excellent performance and lithium ion mobility due to optimal electrolyte conductivity and viscosity.

The rechargeable lithium battery may further include a separator between the negative electrode and the positive electrode, depending on a kind of the battery. Examples of a suitable separator material include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

FIG. 3 is an exploded perspective view of a rechargeable lithium battery according to an embodiment. A rechargeable lithium battery according to an embodiment may be a cylindrical battery.

Referring to FIG. 3, a rechargeable lithium battery 100 according to an embodiment includes an electrode assembly 40 manufactured by winding a separator 30 interposed between a positive electrode 10 and a negative electrode

20, and a case 50 housing the electrode assembly 40.

Hereinafter, examples of the present invention and comparative examples are described. These examples, however, are not in any sense to be interpreted as limiting the scope of the invention.

(Example 1)

97.5 wt% of artificial graphite, 1.5 wt% of a styrene butadiene rubber, and 1 wt% of carboxylmethyl cellulose were mixed in a water solvent to prepare negative active material slurry having 2300 cps of viscosity (at 25 °C).

A Cu foil was disposed on a magnet having a magnetic field strength of 4000 Gauss, and the negative active material slurry was coated on the Cu foil while the Cu foil was moved and then, exposed to a magnetic field for 9 seconds, dried, and compressed to manufacture a negative electrode having a loading level (L/L) of 12 mg/cm$^2$ on one side of the current collector.

96 wt% of a $LiCoO_2$ positive active material, 2 wt% of a carbon black conductive agent, and 2 wt% of a polyvinylidene fluoride binder were mixed in an N-methylpyrrolidone solvent to prepare positive active material slurry. The slurry was coated on an Al substrate, dried, and compressed to manufacture a positive electrode.

The negative and positive electrodes and an electrolyte were used to manufacture a pouch-type full rechargeable lithium battery cell having capacity of 550 mAh and current density of 4.16 mAh/cm$^2$. Herein, the electrolyte was prepared by using a mixed solvent of ethylene carbonate and diethyl carbonate (50 : 50 of a volume ratio) and dissolving 1 M $LiPF_6$ therein.

(Example 2)

A pouch-type rechargeable lithium battery cell was manufactured according to the same method as Example 1 by manufacturing the negative electrode having a loading level (L/L) of 12 mg/cm$^2$ on one side of the current collector except for changing the exposure time to a magnetic field from 9 seconds to 3 seconds.

(Example 3)

A pouch-type rechargeable lithium battery cell was manufactured according to the same method as Example 1 by manufacturing the negative electrode having a loading level (L/L) of 12 mg/cm$^2$ on one side of the current collector except for changing the exposure time to a magnetic field from 9 seconds to 5 seconds.

(Example 4)

A pouch-type rechargeable lithium battery cell was manufactured according to the same method as Example 1 by manufacturing the negative electrode having a loading level (L/L) of 12 mg/cm$^2$ on one side of the current collector except for changing the magnetic field strength from 4000 Gauss to 5000 Gauss.

(Comparative Example 1)

97.5 wt% of artificial graphite, 1.5 wt% of a styrene butadiene rubber, and 1 wt% of carboxylmethyl cellulose were mixed in a water solvent to prepare negative active material slurry having viscosity of 2300 cps (at 25 °C).

The negative active material slurry was coated on a Cu foil, dried, and compressed to manufacture a negative electrode having a loading level (L/L) of 12 mg/cm$^2$ on one side of the current collector.

The negative electrode was used along with the positive electrode and the electrolyte solution used in Example 1 to manufacture a pouch-type rechargeable lithium battery cell.

(Comparative Example 2)

A pouch-type rechargeable lithium battery cell was manufactured according to the same method as Example 1 by manufacturing the negative electrode having a loading level (L/L) of 12 mg/cm$^2$ on one side of the current collector except for changing the exposure time to a magnetic field from 9 seconds to 2 seconds.

(Comparative Example 3)

A pouch-type rechargeable lithium battery cell was manufactured according to the same method as Example 1 by manufacturing the negative electrode having aloading level (L/L) of 12 mg/cm$^2$ on one side of the current collector except for changing the exposure time to a magnetic field from 9 seconds to 10 seconds and the magnetic field strength from 4000

Gauss to 5000 Gauss.

(Reference Example 1)

A pouch-type rechargeable lithium battery cell was manufactured according to the same method as Example 1 by manufacturing the negative electrode having a loading level (L/L) of 12 $mg/cm^2$ on one side of the current collector except for changing the exposure time to a magnetic field from 9 seconds to 2 seconds and viscosity of the negative active material slurry from 2300 cps to 2700 cps.

(Example 5)

A pouch-type rechargeable lithium battery cell was manufactured according to the same method as Example 1 by manufacturing the negative electrode having a loading level (L/L) of 12 $mg/cm^2$ on one side of the current collector except for changing the magnetic field strength from 4000 Gauss to 3800 Gauss.

(Comparative Example 4)

A pouch-type rechargeable lithium battery cell was manufactured according to the same method as Example 1 by manufacturing the negative electrode having a loading level (L/L) of 12 $mg/cm^2$ on one side of the current collector except for changing the exposure time to a magnetic field strength from 9 seconds to 1 second.

(Example 6)

97.5 wt% of artificial graphite, 1.5 wt% of a styrene butadiene rubber, and 1 wt% of carboxylmethyl cellulose were mixed in a water solvent to prepare negative active material slurry having viscosity of 2300 cps (at 25 °C).
A Cu foil was disposed on a magnet having a magnetic field strength of 4000 Gauss, and the negative active material slurry was coated on the Cu foil while the Cu foil was moved and then, exposed to a magnetic field for 9 seconds, dried, and compressed to manufacture a negative electrode having a loading level (L/L) of 12 $mg/cm^2$ on one side of the current collector.
96 wt% of a $LiCoO_2$ positive active material, 2 wt% of a carbon black conductive agent, and 2 wt% of a polyvinylidene fluoride binder were mixed in an N-methylpyrrolidone solvent to prepare positive active material slurry. The slurry was coated on an Al substrate, dried, and compressed to manufacture a positive electrode.
The negative and positive electrodes were used along with an electrolyte to manufacture a cylindrical full rechargeable lithium battery cell having capacity of 2.5 A. Herein, the electrolyte was prepared by dissolving 1 M $LiPF_6$ in a mixed solvent of ethylene carbonate and diethyl carbonate (50 : 50 of a volume ratio).

(Comparative Example 5)

97.5 wt% of artificial graphite, 1.5 wt% of a styrene butadiene rubber, and 1 wt% of carboxylmethyl cellulose were mixed in a water solvent to prepare negative active material slurry having viscosity of 2300 cps (at 25 °C).
The negative active material slurry was coated on a Cu foil, dried, and compressed to manufacture a negative electrode having a loading level (L/L) of 12 $mg/cm^2$ on one side of the current collector.
The negative electrode was used along with the positive electrode and the electrolyte used in Example 6 to manufacture a cylindrical rechargeable lithium battery cell having capacity of 2.5 A.

(Comparative Example 6)

A cylindrical rechargeable lithium battery was manufactured according to the same method as Comparative Example 2 by manufacturing the negative electrode having a loading level (L/L) of 12 $mg/cm^2$ on one side of the current collector except for changing the exposure time to a magnetic field from 2 seconds to 1.5 seconds and viscosity of the negative active material slurry from 2300 cps to 2700 cps.

* X-ray Diffraction Characteristics

The rechargeable lithium battery cells according to Example 1 and Comparative Example 1 were twice charged and discharged at 0.1 C and then completely discharged to 2.75 V at 0.1 C. The completely-discharged battery cells were disassembled to obtain negative electrodes. As for these negative electrodes, an X'Pert (PANalytical B.V.) XRD equipment using a CuK$\alpha$ ray as a target ray was used, but a monochromator equipment was removed in order to

improve a peak intensity resolution. Herein, the measurement was performed under a condition of 2θ = 10° to 80 °, a scan speed (°/S) = 0.06436, and a step size of 0.026 °/step.

The measured XRD results are shown in FIG. 4 (Example 1) and FIG. 5 (Comparative Example 1). As shown in FIGS. 4 and 5, the negative electrode of Comparative Example 1 showed a higher peak at 2θ = 26.5±0.2 ° than the negative electrode of Example 1. In addition, as shown in FIGS. 4 and 5, the negative electrodes of Example 1 and Comparative Example 1 showed a peak at 2θ = 26.5±0.2 ° ((002) plane), 42.4±0.2 ° ((100) plane), 43.4±0.2 ° ((101)R plane), 44.6±0.2 ° ((101) H plane), 54.7±0.2 ° ((004) plane), and 77.5±0.2 ° ((110) plane).

As shown in FIGS. 4 and FIG. 5, the areas of the peaks shown at 2θ = 26.5±0.2 ° ((002) plane), 42.4±0.2 ° ((100) plane), 43.4±0.2 ° ((101) R plane), 44.6±0.2 ° ((101) H plane), 54.7±0.2 ° ((004) plane), and 77.5±0.2 ° ((110) plane) were measured, and the results are shown in Table 1. In addition, the area sum of peaks shown at 2θ = 42.4±0.2° ((100) plane), 43.4±0.2° ((101)R plane), 44.6±0.2° ((101)H plane), and 77.5±0.2° ((110) plane) as $I_a$, and the area sum of peaks shown at 2θ = 26.5±0.2° ((002) plane), 42.4±0.2° ((100) plane), 43.4±0.2° ((101)R plane), 44.6±0.2° ((101)H plane), 54.7±0.2° ((004) plane), and 77.5±0.2° ((110) plane) as $I_{total}$, are shown in Table 1, and DD ($I_{total}/I_a$) obtained by calculating from the values is shown in Table 1. Furthermore, $I_{(004)}/I_{(002)}$ and $I_{(100)}/I_{(004(}$ were calculated and are shown in Table 1. In particular, peaks corresponding to a (101)R plane of graphite and a (111) plane of a Cu current collector at 43.4±0.2 ° overlapped.

In addition, the X-ray diffraction characteristics of Comparative Example 6 were measured as the same method as above, and the results are shown in Table 1.

Table 1

| 2θ | Peak plane (peak index) | Peak area | | |
|---|---|---|---|---|
| | | Comparative Example 1 | Example 1 | Comparative Example 6 |
| 26.5±0.2° | (002) | 82472.39 | 25645.53 | 41253.6 |
| 42.4±0.2° | (100) | 262.05 | 496.89 | 215.5 |
| 43.4±0.2° | (101)R | 12615.36 | 14684.67 | 7426.2 |
| 44.6±0.2° | (101)H | 965.65 | 2461.94 | 1052.3 |
| 54.7±0.2° | (004) | 2698.36 | 1415.31 | 2125.3 |
| 77.5±0.2° | (110) | 246.98 | 563.02 | 842.3 |
| $I_{total}$ | | 99260.79 | 45267.36 | 52915.2 |
| $I_a$ | | 14090.04 | 18206.52 | 9536.3 |
| DD | | 14.19 | 40.22 | 18.02 |
| $I_{(004)}/I_{(002)}$ | | 0.033 | 0.055 | 0.052 |
| $I_{(110)}/I_{(004)}$ | | 0.09153 | 0.397807 | 0.396321 |

As shown in Table 1, the negative electrode of Example 1 showed a DD value of greater than or equal to about 19, but the negative electrode of Comparative Example 1 showed a DD value of less than 19, and the negative electrode of Example 1 showed $I_{(004)}/I_{(002)}$ of greater than or equal to 0.04, but the negative electrode of Comparative Example 1 showed $I_{(004)}/I_{(002)}$ of less than 0.04. In addition, the negative electrode of Example 1 showed $I_{(110)}/I_{(004)}$ of greater than or equal to 0.3, while the negative electrode of Comparative Example 1 showed $I_{(110)}/I_{(004)}$ of less than 0.3.

In addition, since the negative electrode of Comparative Example 6 showed $I_{(110)}/I_{(004)}$ of greater than or equal to 0.3 but a DD value of less than 19, a negative electrode showing $I_{(110)}/I_{(004)}$ of greater than or equal to 0.3 did not necessarily show a DD value of greater than or equal to about 19.

XRD of the rechargeable lithium battery cells according to Examples 2 to 5, Comparative Examples 2 to 4, and Reference Example 1 was measured in the same method as the cells according to Example 1 and Comparative Example 1, and from the results, a DD value and $I_{(004)}/I_{(002)}$ were obtained and are shown in Table 2.

Table 2

| | DD value | $I_{(004)}/I_{(002)}$ |
|---|---|---|
| Example 2 | 19 | 0.041 |
| Example 3 | 33.5 | 0.045 |
| Example 4 | 60 | 0.043 |

(continued)

| | DD value | $I_{(004)}/I_{(002)}$ |
|---|---|---|
| Example 5 | 40 | 0.042 |
| Comparative Example 2 | 18.5 | 0.041 |
| Comparative Example 3 | 60.5 | 0.042 |
| Comparative Example 4 | 18 | 0.044 |
| Reference Example 1 | 19 | 0.035 |

As shown in Table 2, the negative electrodes of Examples 2 to 5 showed a DD value of greater than or equal to about 19 and less than or equal to about 60 and $I_{(004)}/I_{(002)}$ of greater than or equal to 0.04, while the negative electrodes of Comparative Examples 2 to 4 and Reference Example 1 showed a DD value of less than 19 (Comparative Examples 2 and 4) or greater than 60 (Comparative Example 3) and $I_{(004)}/I_{(002)}$ of less than 0.04 (Reference Example 1).

* BET Measurement

The rechargeable lithium battery cells according to Examples 1 to 6, Comparative Examples 1 to 5, and Reference Example 1 were charged and discharged at 0.1 C and completely discharged to 3 V and then, disassembled to obtain negative electrodes. The negative electrodes were respectively used to obtain each 5 cm X 5 cm size sample, these samples were respectively cut into a size of 0.5 cm X 0.5 cm and put in a BET sample holder, and then, their BET's were measured in a nitrogen gas adsorption method, and the results are shown in Table 3.

Table 3

| | BET ($m^2/g$) |
|---|---|
| Example 1 | 0.71 |
| Example 2 | 0.72 |
| Example 3 | 0.75 |
| Example 4 | 0.85 |
| Example 5 | 0.89 |
| Example 6 | 0.79 |
| Comparative Example 1 | 0.85 |
| Comparative Example 2 | 0.82 |
| Comparative Example 3 | 0.74 |
| Comparative Example 4 | 0.76 |
| Comparative Example 5 | 0.89 |
| Reference Example 1 | 0.76 |

As shown in Table 3, the specific surface areas of the negative electrodes according to Examples 1 to 6, Comparative Examples 1 to 5, and Reference Example 1 were all less than 5.0 $m^2/g$.

* DC-IR (Direct Current Internal Resistance)

The rechargeable lithium battery cells according to Examples 2 to 5, Comparative Examples 2 to 4, and Reference Example 1 were evaluated under a 0.1 C charge and discharge condition, and their discharge capacity was first confirmed and regarded as a 1 C reference.

After confirming the discharge capacity, DC internal resistance (DC-IR) was evaluated by 0.025 C cut-off charging the battery cells at 0.7 C under CCCV (constant current/constant voltage) and discharging the battery cells at 0.1 C and measuring a voltage drop (V) while a current flew at 1 C for 1 second under a SOC condition such as SOC70 (charged to be 70 % of charge capacity based on 100 % of entire battery charge capacity, which is 30 % discharged in a discharge state), SOC20 (charged to be 20 % of charge capacity based on 100 % of entire battery charge capacity, which is

80 % discharged in a discharge state), and SOC10 (charged to be 10 % of charge capacity based on 100 % of entire battery charge capacity, which is 90 % discharged in a discharge state). Among the results, the results of Examples 2 to 4 and Comparative Examples 2 and 3 are shown in FIG. 6, and the result of Reference Example 1 is shown in FIG. 7. In addition, the results of Example 2 and Comparative Example 2 are also shown in FIG. 7 for comparison.

As shown in FIGS. 6 and 7, the negative electrodes of Examples 2 and 3 showed a DD value of greater than or equal to about 19 but less than or equal to about 60 and thus lower DC internal resistance under the SOC condition than Comparative Examples 2 and 3 and Reference Example 1.

In addition, a ratio of DC internal resistance at SOC10 relative to DC internal resistance at SOC70 was calculated, and the results of Example 5 and Comparative Example 4 among the results are shown in Table 4.

Table 4

| | DC-IR ratio (SOC10/SOC70, %) |
|---|---|
| Comparative Example 4 | 1.28 |
| Example 5 | 1.19 |

As shown in Table 4, Example 5 showed a lower ratio of DC internal resistance at SOC10 relative to DC internal resistance at SOC70 than Comparative Example 4, and it shown from the results that that DC internal resistance was less increased according to a charge state.

* Rate Capability

The full cells according to Examples 2 to 4, Comparative Examples 2 and 3, and Reference Example were respectively once charged and discharged at each 0.2 C, 0.5 C, 1 C, 1.5 C, and 2 C, and their capacity ratios at each Crate relative to 0.2 C discharge capacity were calculated, and among the results, the results of Examples 2 to 4 and Comparative Examples 2 and 3 are shown in FIG. 8, and the result of Reference Example 1 is shown in FIG. 9. In addition, the results of Example 2 and Comparative Example 2 are shown in FIG. 9 for comparison.

As shown in FIGS. 8 and 9, the negative electrodes of Examples 2 and 3 showed a DD value of greater than or equal to about 19 but less than or equal to 60 and thus excellent capacity retention at all C-rates compared with the negative electrodes of Comparative Examples 2 to 4.

* Cycle-life Characteristics

The full cells of Examples 2 to 4, Comparative Examples 2 and 3, and Reference Example 1 were respectively constant current/constant voltage charged under a condition of 1.0 C, 4.4 V, and 0.1 C cut-off, paused for 5 minutes, constant current discharged under a condition of 1.0 C and 3.0 V cut-off and paused for 5 minutes as a one cycle, and this cycle was 400 times repeated. A capacity retention depending on a charge and discharge cycle was evaluated by calculating a discharge capacity ratio at each cycle relative to discharge capacity at the first cycle, and the results are shown in FIG. 10.

As shown in FIG. 10, the negative electrodes of Example 2 and 3 showing a DD value of greater than or equal to about 19 but less than or equal to 60 maintained a capacity retention of greater than or equal to 80 % even at the 400$^{th}$ cycle, while the negative electrode of Comparative Example 2 showed a capacity retention of less than 80 % even at the 100$^{th}$ cycle, the negative electrode of Reference Example 1 showed a capacity retention of less than 80 % even at the 230$^{th}$ cycle, and the negative electrode of Comparative Example 3 showed a capacity retention of less than 80 % even at the 330$^{th}$ cycle, and that is, the capacity retention was rapidly decreased.

* Lithium Precipitation Evaluation

The rechargeable lithium battery cells according to Comparative Example 2 and Example 3 were full-charged at 0.7 C, and then, after disassembling the negative electrodes therefrom, a lithium precipitation on the surface of negative electrodes was examined. The results are shown in FIG. 11. As shown in FIG. 11, the lithium precipitation was found on the surface of the negative electrode of Comparative Example 2, while the lithium precipitation was not found on the surface of the negative electrode of Example 3. As shown above, no lithium precipitation means that there is small resistance when lithium ions are inserted into a negative electrode. Accordingly, since the resistance of the negative electrode is decreased through orientation, the lithium precipitation is suppressed, the suppressed lithium precipitation may improve battery stability and suppress depletion of an electrolyte solution due to continuous decomposition of the electrolyte solution and thus, improve battery electrochemical characteristics such as a cycle-life.

* Expansion Rate Capability

The rechargeable lithium battery cells according to Example 5 and Comparative Example 4 were evaluated under a 0.1 C charge and discharge condition, and herein, discharge capacity of the cells was confirmed and regarded as a 1 C reference.

Then, the battery cells were 0.025 C cut-off charged at 0.7 C under CCCV (constant current constant voltage) and discharged at 0.1 C, then, cut-off at 0.7 C CCCV and 0.025 C, and then, fully charged to be SOC100 (charged to be 100 % of charge capacity based on 100 % of entire battery charge capacity, which is 0 % discharged) and disassembled to measure thickness of each electrode plate in the full charge state, and this thickness was compared with the thickness of the electrode plate after compression and vacuum-drying. The results are shown in Table 5.

Table 5

| | Swelling ratio (SOC100, %) |
|---|---|
| Comparative Example 4 | 19.4 |
| Example 5 | 15.5 |

As shown in Table 5, the rechargeable lithium battery cell of Example 5 showed a smaller swelling ratio than that of Comparative Example 4, and the reason is that an electrode is oriented non-parallel to a current collector and thus contracted and expanded in X-axis and Y-axis directions rather than a Z-axis direction during repetitive charges and discharges, unlike a conventional electrode oriented parallel to a current collector and thus contracted and expanded in the Z-axis direction during repetitive charges and discharges. In addition, when the electrode is completely vertically oriented with the current collector, the electrode is contracted and expanded in the X-axis and Y-axis directions and thus may cause deformation of a battery cell, but the cell of Example 5 was not deformed since the cell had no completely vertical orientation.

* Thermal Diffusivity and Penetration Evaluation

Thermal diffusivity of the negative electrodes according to Example 5 and Comparative Example 1 was measured, and the results are shown in FIG. 12. The thermal diffusivity was measured in a Xenon flash method. The xenon flash method was performed according to ASTM E1461 by locating a negative electrode inside a furnace maintained at 25 °C, radiating xenon flashlight on one surface of the negative electrode with energy of 10 J/pulse to heat the negative electrode, and then, measuring the thermal diffusivity with a nitrogen-cooled InSb IR detector when a temperature was increased in an opposite of the negative electrode, and herein, a LFA-447 (NETZSCH, Germany) equipment was used. As shown in FIG. 12, Example 5 showed 38 % improved thermal diffusivity and accordingly, excellent thermal conductivity (= thermal diffusivity x specific heat x density) compared with Comparative Example 1.

In addition, each ten rechargeable lithium battery cells according to Example 5 and the Comparative Example 1 was manufactured to conduct a penetration experiment, and the results are shown in Table 6.

The penetration experiment was performed by respectively charging the rechargeable lithium battery cells at 0.5 C up to 4.2 V for 3 hours, pausing for about 10 minutes (up to 72 hours), and then, penetrating the center of the cells with a pin having a diameter of 5 mm at 60 Mm/sec.

As shown in FIG. 12, Example 5 showed 38 % improved thermal diffusivity and thus easily discharged heat generated thereby compared with Comparative Example 1.

Table 6

| | OK (L1 mode) | NG (L4 mode) |
|---|---|---|
| Comparative Example 1 | 6 cells | 4 cells |
| Example 5 | 10 cells | 0 cell |
| L1: A short circuit occurs, but not ignited.<br>L4: Ignited due to a short circuit | | |

As shown in Table 6, all the ten cells of Example 5 turned out to be OK, corresponding to a L1 mode, but six cells out of ten cells of Comparative Example 1 turned out to be OK corresponding to a L1 mode while the rest four cells of Comparative Example 1 turned out to be NG corresponding to a L4 mode, and accordingly Example 5 showed excellent battery safety compared with Comparative Example 1. This result, as shown in FIG. 12, is obtained, because the negative

electrode of Example 5 showed higher thermal diffusivity than the negative electrode of Comparative Example 1 and thus fast discharged heat generated during the penetration and was suppressed from ignition due to thermal runaway.

* Thermal Stability Evaluation

Surface temperature of the cylindrical rechargeable lithium battery cells according to Example 6 and Comparative Example 5 was measured, while the cells were discharged with a 30 A constant current at 12 C, and the results are shown in Table 7.

Table 7

| | Maximum temperature (°C) |
|---|---|
| Comparative Example 5 | 120 |
| Example 6 | 100 |

As shown in Table 7, Example 6 showed a lower maximum temperature during the discharge than Comparative Example 5, and the reason, as shown in FIG. 12, is that the negative electrode of Example 5 showed higher thermal diffusivity than Comparative Example 1 and thus fast discharged heat generated during the penetration and also was suppressed from a battery temperature increase.

While this disclosure has been described in connection with what is presently considered to be practical example embodiments, it is to be understood that the invention is not limited to the disclosed embodiments, but, on the contrary, is intended to cover various modifications and equivalent arrangements included within the scope of the appended claims.

## Claims

**1.** A negative electrode for a rechargeable lithium battery, comprising

a current collector; and
a negative active material layer disposed on the current collector and including a carbon-based negative active material that is artificial graphite or a mixture of artificial graphite and natural graphite,
wherein a DD (Degree of Divergence) value defined by Equation 1 is greater than or equal to about 19 and less than or equal to about 60:

[Equation 1]

$$DD\ (\text{Degree of Divergence}) = (I_a/I_{total}) * 100$$

wherein, in Equation 1,
$I_a$ is a sum of peak intensities at $2\theta$=42.4±0.2°, 43.4±0.2°, 44.6±0.2°, and 77.5±0.2° measured by XRD using a CuK$\alpha$ ray, and
$I_{total}$ is a sum of peak intensities at $2\theta$ = 26.5±0.2°, 42.4±0.2°, 43.4±0.2°, 44.6±0.2°, 54.7±0.2°, and 77.5±0.2° measured by XRD using a CuK$\alpha$ ray.

**2.** A negative electrode according to claim 1, wherein a BET specific surface area of the negative electrode is less than about 5.0 $m^2/g$.

**3.** A negative electrode according to claim 1 or claim 2, wherein the negative electrode has a loading level (L/L) of about 6 $mg/cm^2$ to about 65 $mg/cm^2$ on one side of the current collector.

**4.** A negative electrode according to any one of claims 1 to 3, wherein the peak intensity is a peak integral area value.

**5.** A negative electrode according to any one of claims 1 to 4, wherein the negative electrode has a ratio($I_{(004)}/I_{(002)}$) of a peak intensity at a (004) plane relative to a peak intensity at a (002) plane of greater than or equal to about 0.04 measured by XRD using a CuK$\alpha$ ray.

6. A negative electrode according to any one of claims 1 to 5, wherein the negative electrode has a ratio($I_{(004)}/I_{(002)}$) of a peak intensity at a (004) plane relative to a peak intensity at a (002) plane of greater than or equal to about 0.04 and less than or equal to about 0.07 measured by XRD using a CuK$\alpha$ ray.

7. A negative electrode according to any one of claims 1 to 6, wherein the negative active material layer further includes a Si-based negative active material, a Sn-based negative active material, a lithium vanadium oxide, or a combination thereof.

8. A negative electrode according to any one of claims 1 to 7, wherein the negative electrode has an active region facing a positive electrode and an inactive region not facing a positive electrode, and
a DD value of the inactive region is greater than or equal to about 19 and less than or equal to about 60.

9. A rechargeable lithium battery comprising

the negative electrode according to any one of claims 1 to 8;
a positive electrode including a positive active material; and
an electrolyte.

10. A rechargeable lithium battery according to claim 9, wherein the rechargeable lithium battery is a high power battery.

11. A rechargeable lithium battery according to claim 9 or claim 10, wherein the rechargeable lithium battery is a cylindrical battery or a pouch type battery.

12. A rechargeable lithium battery according to claim 11, wherein the cylindrical battery is a 18650 type cylindrical battery or a 21700 type cylindrical battery.

**Patentansprüche**

1. Negative Elektrode für eine wiederaufladbare Lithiumbatterie, umfassend:

einen Stromkollektor; und
eine negative aktive Materialschicht, die auf dem Stromkollektor angeordnet ist und ein auf Kohlenstoff basierendes negatives aktives Material einschließt, das künstlicher Graphit oder eine Mischung aus künstlichem Graphit und natürlichem Graphit ist,
wobei ein durch Gleichung 1 definierter Wert für DD (Divergenzgrad) größer als oder gleich etwa 19 und kleiner als oder gleich etwa 60 ist:

[Gleichung 1]

$$DD\ (Divergenzgrad) = (I_a/I_{total}) * 100$$

wobei in Gleichung 1,
$I_a$ eine Summe von Peak-Intensitäten bei $2\theta = 42,4 \pm 0,2°$, $43,4 \pm 0,2°$, $44,6 \pm 0,2°$ und $77,5 \pm 0,2°$ ist, gemessen durch Röntgendiffraktometrie unter Verwendung eines Cu-K$\alpha$-Strahls, und
$I_{total}$ eine Summe von Peak-Intensitäten bei $2\theta = 26,5 \pm 0,2°$, $42,4 \pm 0,2°$, $43,4 \pm 0,2°$, $44,6 \pm 0,2°$, $54,7 \pm 0,2°$ und $77,5 \pm 0,2°$ ist, gemessen durch Röntgendiffraktometrie unter Verwendung eines Cu-K$\alpha$-Strahls.

2. Negative Elektrode nach Anspruch 1, wobei eine spezifische Oberfläche nach BET der negativen Elektrode weniger als etwa 5,0 $m^2/g$ beträgt.

3. Negative Elektrode nach Anspruch 1 oder Anspruch 2, wobei die negative Elektrode auf einer Seite des Stromkollektors einen Beladungspegel (L/L) von etwa 6 $mg/cm^2$ bis etwa 65 $mg/cm^2$ aufweist.

4. Negative Elektrode nach einem der Ansprüche 1 bis 3, wobei die Peak-Intensität ein integrierter Flächenwert unter einem Peak ist.

5. Negative Elektrode nach einem der Ansprüche 1 bis 4, wobei die negative Elektrode ein Verhältnis ($I_{(004)}/I_{(002)}$) einer

Peak-Intensität an einer (004)-Ebene relativ zu einer Peak-Intensität an einer (002)-Ebene von größer als oder gleich etwa 0,04 aufweist, gemessen durch Röntgendiffraktometrie unter Verwendung eines Cu-K$\alpha$-Strahls.

**6.** Negative Elektrode nach einem der Ansprüche 1 bis 5, wobei die negative Elektrode ein Verhältnis ($I_{(004)}/I_{(002)}$) einer Peak-Intensität an einer (004)-Ebene relativ zu einer Peak-Intensität an einer (002)-Ebene von größer als oder gleich etwa 0,04 und kleiner als oder gleich etwa 0,07 aufweist, gemessen durch Röntgendiffraktometrie unter Verwendung eines Cu-K$\alpha$-Strahls.

**7.** Negative Elektrode nach einem der Ansprüche 1 bis 6, wobei die negative aktive Materialschicht ferner ein negatives aktives Material auf Si-Basis, ein negatives aktives Material auf Sn-Basis, ein Lithium-Vanadium-Oxid oder eine Kombination davon einschließt.

**8.** Negative Elektrode nach einem der Ansprüche 1 bis 7, wobei die negative Elektrode einen aktiven Bereich, der einer positiven Elektrode zugewandt ist, und einen inaktiven Bereich, der nicht einer positiven Elektrode zugewandt ist, aufweist, und
ein DD-Wert des inaktiven Bereichs größer als oder gleich etwa 19 und kleiner als oder gleich etwa 60 ist.

**9.** Wiederaufladbare Lithiumbatterie, umfassend:

die negative Elektrode nach einem der Ansprüche 1 bis 8;
eine positive Elektrode, die ein positives aktives Material einschließt, und
einen Elektrolyten.

**10.** Wiederaufladbare Lithiumbatterie nach Anspruch 9, wobei die wiederaufladbare Lithiumbatterie eine Hochleistungsbatterie ist.

**11.** Wiederaufladbare Lithiumbatterie nach Anspruch 9 oder Anspruch 10, wobei die wiederaufladbare Lithiumbatterie eine zylindrische Batterie oder eine Batterie vom Typ einer Pouch-Zelle ist.

**12.** Wiederaufladbare Lithiumbatterie nach Anspruch 11, wobei die zylindrische Batterie eine zylindrische Batterie des Typs 18650 oder eine zylindrische Batterie des Typs 21700 ist.

## Revendications

**1.** Électrode négative pour une batterie rechargeable au lithium, comprenant :

un collecteur de courant, et
une couche de matériau actif négatif disposée sur le collecteur de courant et incluant un matériau actif négatif à base de carbone qui est du graphite artificiel ou un mélange de graphite artificiel et de graphite naturel,
dans laquelle une valeur de DD (degré de divergence) définie par l'équation 1 est supérieure ou égale à environ 19 et inférieure ou égale à environ 60 :

[Équation 1]

$$\text{DD (degré de divergence)} = (I_a/I_{totale}) * 100,$$

où, dans l'équation 1,
$I_a$ est une somme des intensités de pic à $2\theta = 42{,}4 \pm 0{,}2°$, $43{,}4 \pm 0{,}2°$, $44{,}6 \pm 0{,}2°$ et $77{,}5 \pm 0{,}2°$ mesurées par DRX en utilisant un rayon CuK$\alpha$, et
$I_{totale}$ est une somme des intensités de pic à $2\theta = 26{,}5 \pm 0{,}2°$, $42{,}4 \pm 0{,}2°$, $43{,}4 \pm 0{,}2°$, $44{,}6 \pm 0{,}2°$, $54{,}7 \pm 0{,}2°$ et $77{,}5 \pm 0{,}2°$ mesurées par DRX en utilisant un rayon CuK$\alpha$.

**2.** Électrode négative selon la revendication 1, dans laquelle une surface spécifique selon BET de l'électrode négative est inférieure à environ 5,0 $m^2/g$.

**3.** Électrode négative selon la revendication 1 ou la revendication 2, dans laquelle l'électrode négative a un niveau de chargement (L/L) d'environ 6 $mg/cm^2$ à environ 65 $mg/cm^2$ sur un côté du collecteur de courant.

4. Électrode négative selon l'une quelconque des revendications 1 à 3, dans laquelle l'intensité de pic est une valeur de surface intégrale de pic.

5. Électrode négative selon l'une quelconque des revendications 1 à 4, dans laquelle l'électrode négative a un rapport ($I_{(004)}$ / $I_{(002)}$) d'une intensité de pic au niveau d'un plan (004) à une intensité de pic au niveau d'un plan (002) qui est supérieur ou égal à environ 0,04, tel que mesuré par DRX en utilisant un rayon CuK$\alpha$.

6. Électrode négative selon l'une quelconque des revendications 1 à 5, dans laquelle l'électrode négative a un rapport ($I_{(004)}$ / $I_{(002)}$) d'une intensité de pic au niveau d'un plan (004) à une intensité de pic au niveau d'un plan (002) qui est supérieur ou égal à environ 0,04 et inférieur ou égal à environ 0,07, tel que mesuré par DRX en utilisant un rayon CuK$\alpha$.

7. Électrode négative selon l'une quelconque des revendications 1 à 6, dans laquelle la couche de matériau actif négatif inclut en outre un matériau actif négatif à base de Si, un matériau actif négatif à base de Sn, un oxyde de lithium vanadium ou une combinaison de ceux-ci.

8. Électrode négative selon l'une quelconque des revendications 1 à 7, dans laquelle l'électrode négative présente une région active faisant face à une électrode positive et une région inactive qui ne fait pas face à une électrode positive, et une valeur de DD de la région inactive est supérieure ou égale à environ 19 et inférieure ou égale à environ 60.

9. Batterie rechargeable au lithium comprenant :

   l'électrode négative selon l'une quelconque des revendications 1 à 8,
   une électrode positive incluant un matériau actif positif, et
   un électrolyte.

10. Batterie rechargeable au lithium selon la revendication 9, dans laquelle la batterie rechargeable au lithium est une batterie à haute puissance.

11. Batterie rechargeable au lithium selon la revendication 9 ou la revendication 10, dans laquelle la batterie rechargeable au lithium est une batterie cylindrique ou une batterie de type cellule poche.

12. Batterie rechargeable au lithium selon la revendication 11, dans laquelle la batterie cylindrique est une batterie cylindrique de type 18650 ou une batterie cylindrique de type 21700.

FIG. 1

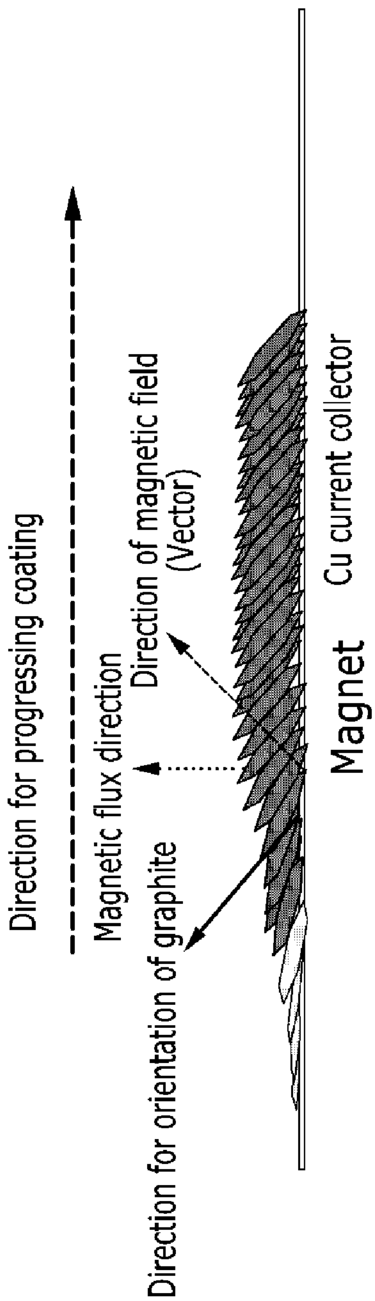
Direction for progressing coating
Magnetic flux direction
Direction for orientation of graphite
Direction of magnetic field
(Vector)
Magnet
Cu current collector

FIG. 2

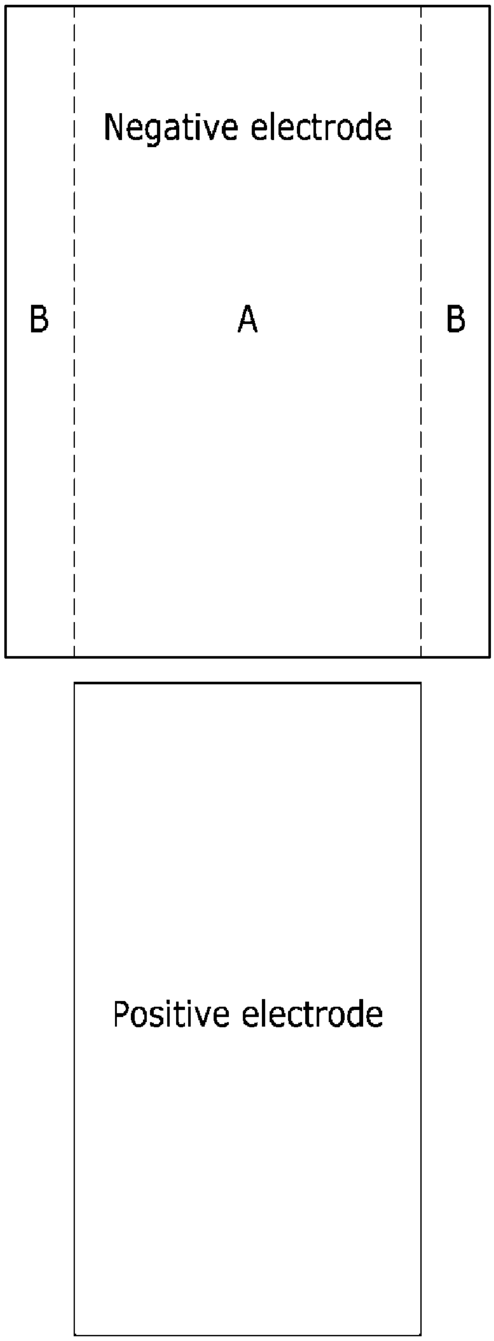

FIG. 3

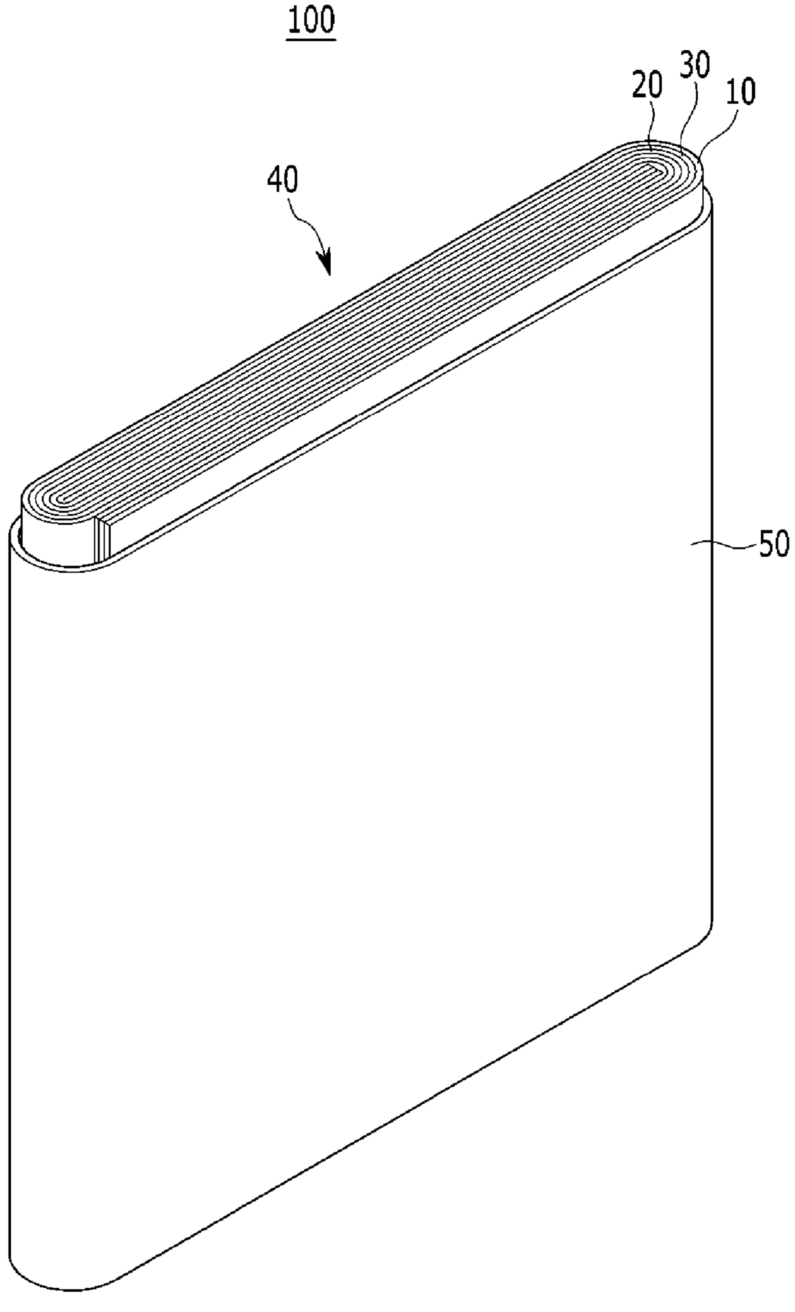

FIG. 4

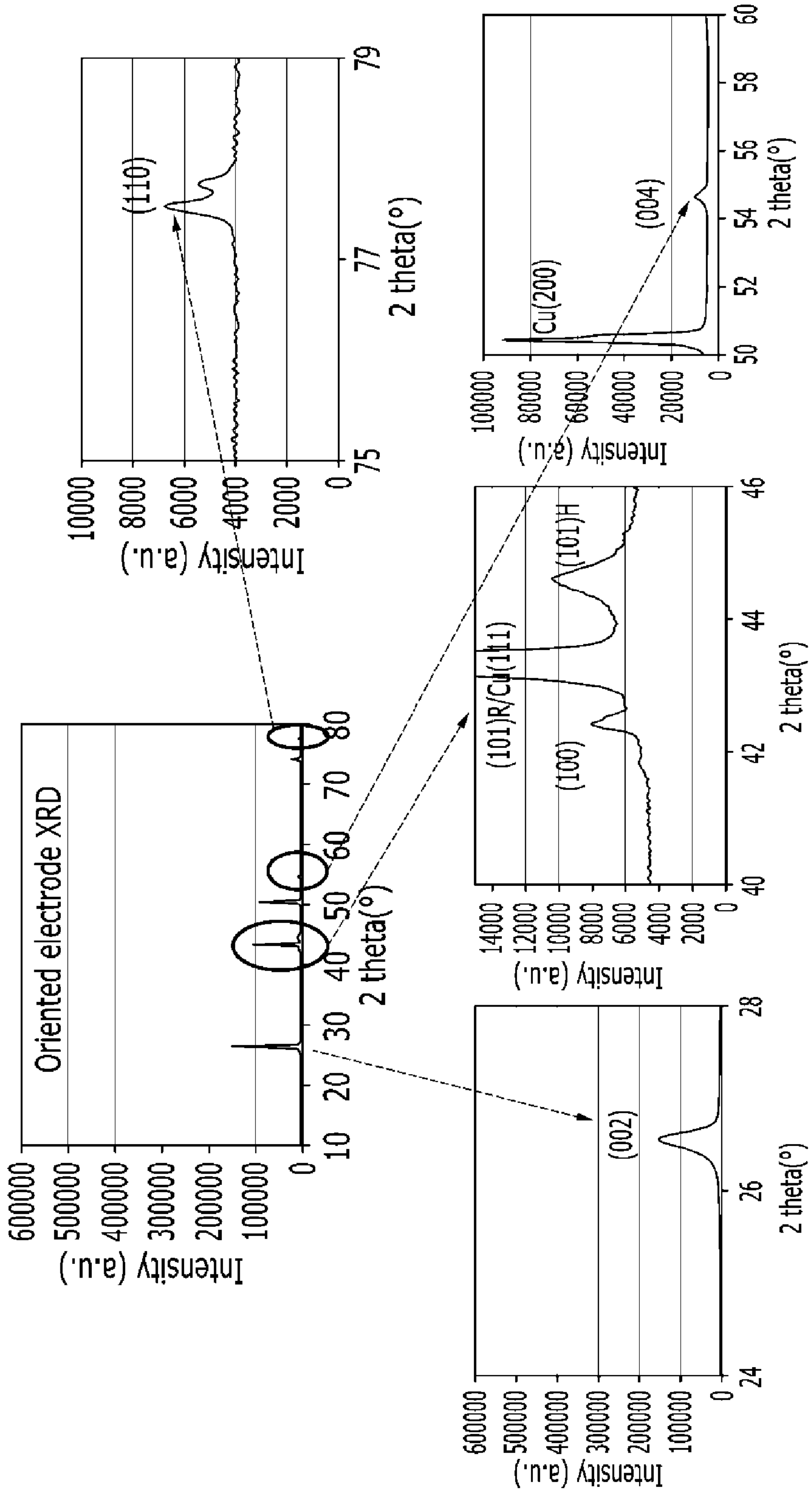
Oriented electrode XRD
Intensity (a.u.)
2 theta(°)
(002)
(100)
(101)R/Cu(111)
(101)H
Cu(200)
(004)
(110)

FIG. 5

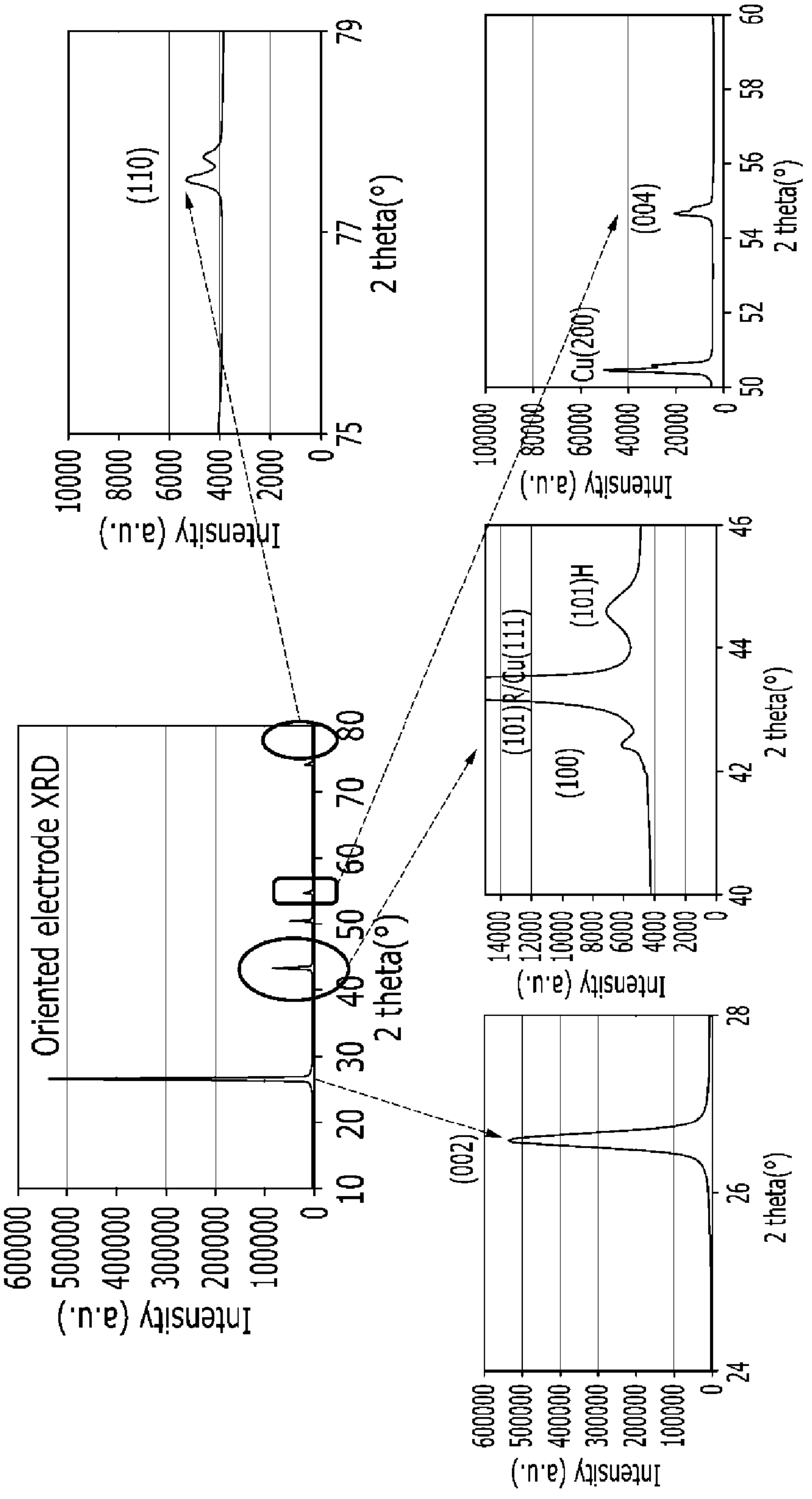
Oriented electrode XRD
Intensity (a.u.)
2 theta(°)
(002)
(100)
(101)R/Cu(111)
(101)H
Cu(200)
(004)
(110)

FIG. 6

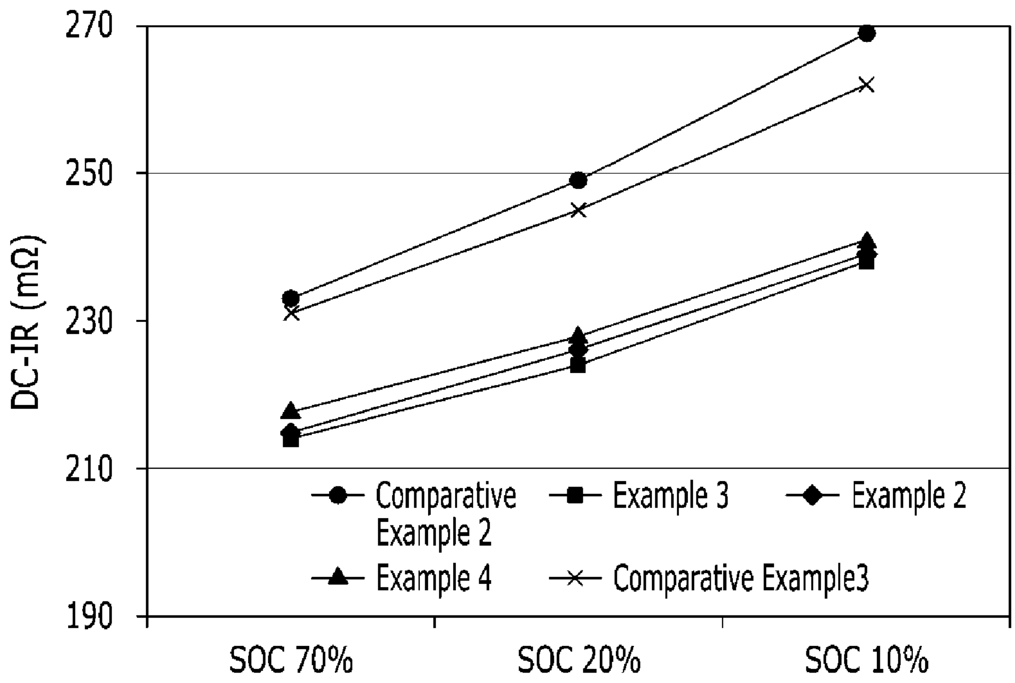
270
250
230
210
190
DC-IR (mΩ)
Comparative Example 2
Example 3
Example 2
Example 4
Comparative Example3
SOC 70%
SOC 20%
SOC 10%

FIG. 7

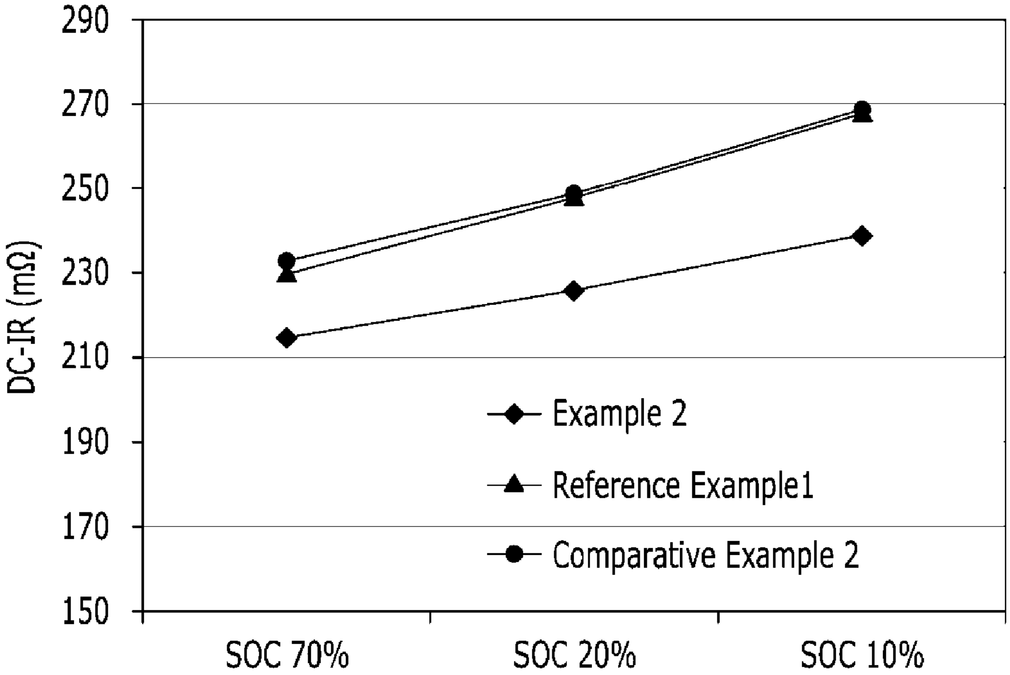
290
270
250
230
210
190
170
150
DC-IR (mΩ)
Example 2
Reference Example1
Comparative Example 2
SOC 70%
SOC 20%
SOC 10%

FIG. 8

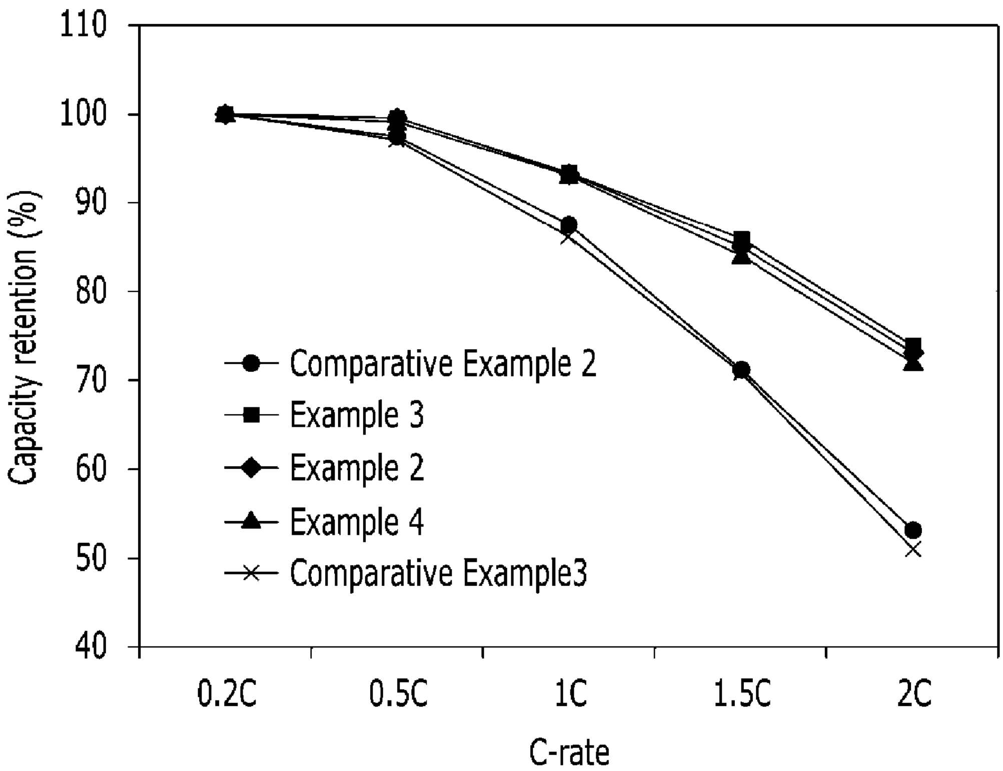
110
100
90
80
70
60
50
40
Capacity retention (%)
Comparative Example 2
Example 3
Example 2
Example 4
Comparative Example3
0.2C
0.5C
1C
1.5C
2C
C-rate

FIG. 9

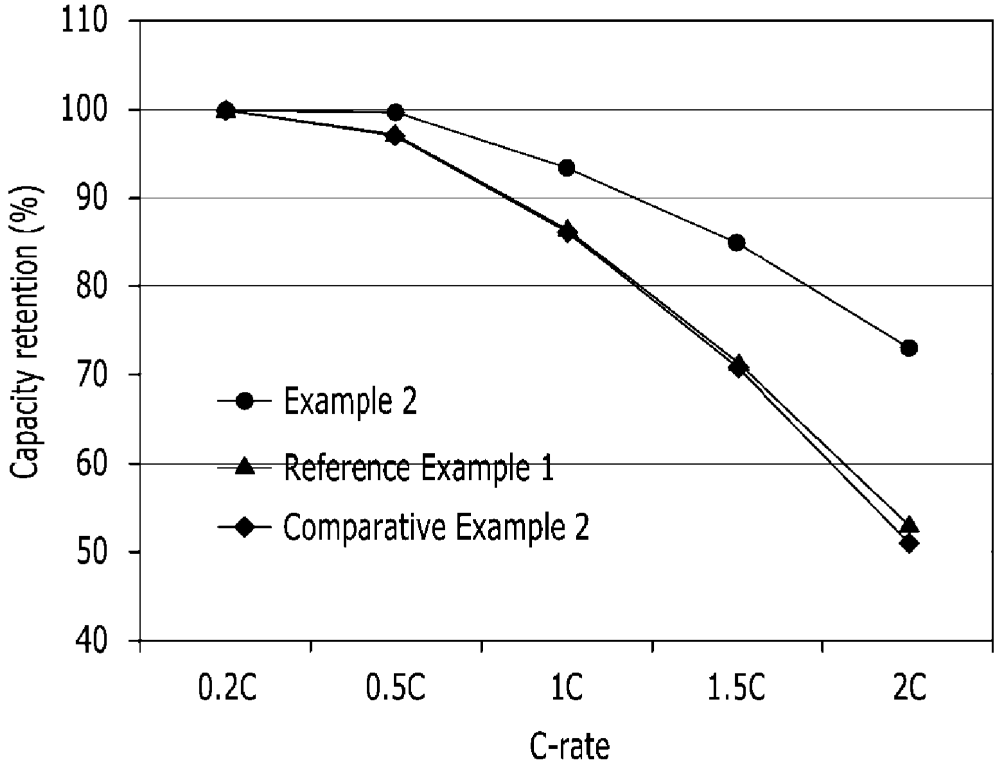
110
100
90
80
70
60
50
40
Capacity retention (%)
Example 2
Reference Example 1
Comparative Example 2
0.2C
0.5C
1C
1.5C
2C
C-rate

FIG. 10

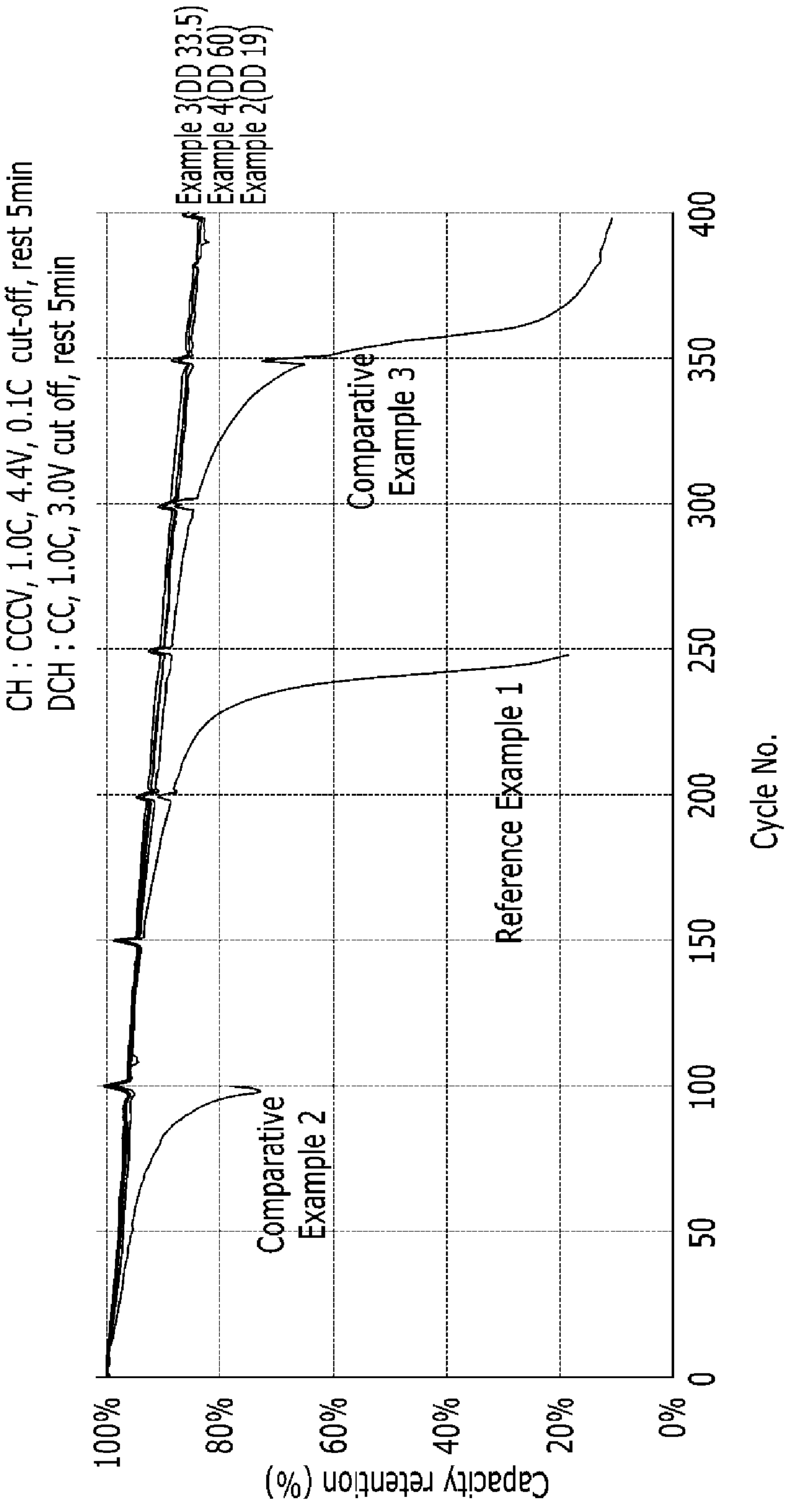
CH : CCCV, 1.0C, 4.4V, 0.1C cut-off, rest 5min
DCH : CC, 1.0C, 3.0V cut off, rest 5min
Example 3(DD 33.5)
Example 4(DD 60)
Example 2(DD 19)
Comparative Example 2
Reference Example 1
Comparative Example 3
Capacity retention (%)
100%
80%
60%
40%
20%
0%
0
50
100
150
200
250
300
350
400
Cycle No.

FIG. 11

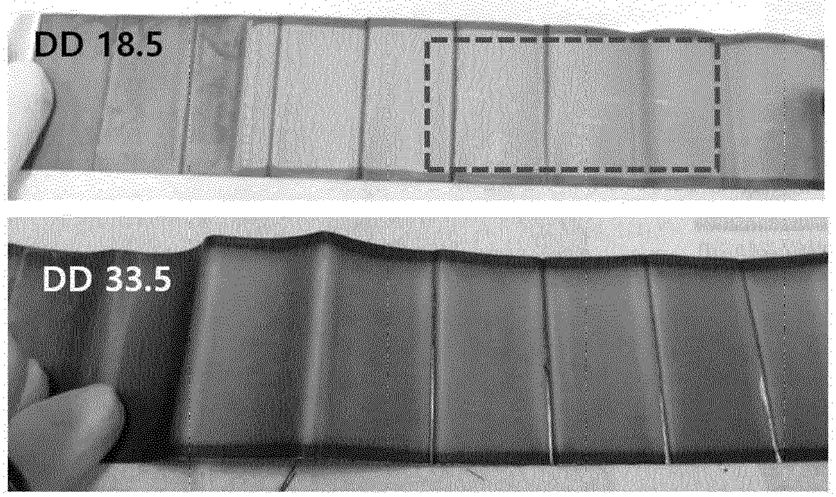


Comparative Example 2

Example 3

FIG. 12

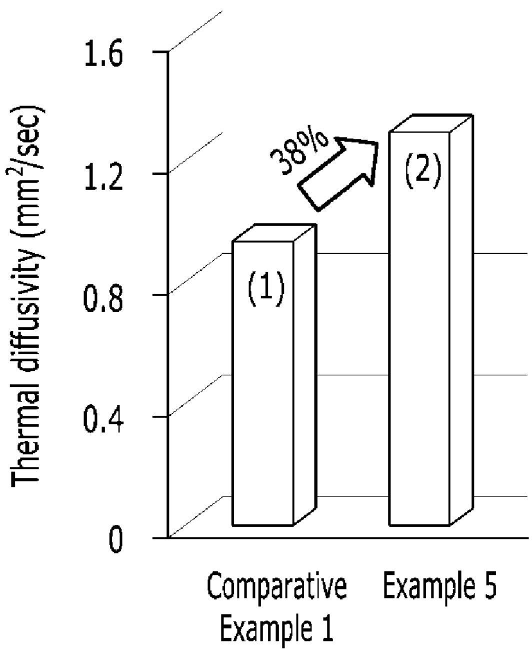
1.6
1.2
0.8
0.4
0
Thermal diffusivity (mm2/sec)
38%
(1)
(2)
Comparative Example 1
Example 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2015030931 A1
- US 2012021294 A1